# EUROPÄISCHE PATENTSCHRIFT

(11) **EP 0 936 013 B1**
(45) Veröffentlichungstag und Bekanntmachung des Hinweises auf die Patenterteilung: **02.05.2003**
(21) Anmeldenummer: 99102202.1
(22) Anmeldetag: 04.02.1999
(51) Int. Cl.: B23C 3/04

(54) **Verwendung eines rotierenden Messerkopfes zur schneidenden Erzeugung von Oberflächen höchster Qualität von Elastomeren**
Use of a rotary cutter for cutting surfaces of elastomer with highest quality
Utilisation d'une tête porte-lames rotative pour couper des surfaces d'élastomères avec la plus grande qualité

(30) Priorität: 13.02.1998 DE 19805864
(43) Veröffentlichungstag der Anmeldung: 18.08.1999
(73) Patentinhaber: Felix Böttcher GmbH & Co., 50933 Köln (DE)
(72) Erfinder: Boxberg, Dietmar, 51515 Kürten-Busch (DE); Schnorrenberg, Hans Peter, 50259 Pulheim (DE)
(74) Vertreter: Werner, Hans-Karsten, Dr.Dipl.-Chem.

(56) Entgegenhaltungen:
- EP-A1- 0 625 406
- EP-A2- 0 806 260
- US-A- 2 398 763
- US-A- 4 534 687
- US-A- 5 660 092

## Beschreibung

Gegenstand der vorliegenden Erfindung ist die Verwendung eines rotierenden Messerkopfes zur schneidenden Erzeugung von Oberflächen höchster Qualität von Elastomeren mit Wendeplatten oder Ringstählen.

Die DE-C-43 05 716 beschreibt die Verwendung einer Schnellfrequenz-Motorspindel zur schneidenden Oberflächenbearbeitung von Elastomeren, wobei der Hochgeschwindigkeitsmesserkopf mit einer Drehzahl von 5.000 bis 120.000 U/min um seine Längsachse rotiert und wobei Elastomere mit einer Shore Härte von 10 Shore A bis 100 Shore D auf der äußeren Schicht eines rotationssymmetrischen Körpers bearbeitet werden. Dieses Verfahren arbeitet meist mit 25.000 bis 30.000 U/min und hat sich im Prinzip bewährt. Die bisher zur Verfügung stehenden Hochfrequenz-Motorspindeln mit Hochgeschwindigkeitsmesserköpfen sind jedoch relativ empfindlich. Die sehr hohe Drehzahl von ca. 25.000 bis 30.000 U/min ist mit unangenehmen akustischen Belästigungen verbunden. Die Maßnahmen zum Schutz vor davonfliegenden und abgeschleuderten Metallteilen bei Bruch oder Zerstörung der Hochgeschwindigkeitsmesserköpfe sind sehr aufwendig. Der Verschleiß an den Hochgeschwindigkeitsmesserköpfen ist relativ hoch. Der Werkzeugeingriff erfolgt dabei orthogonal, da sich das Werkzeug axial zur Walze bewegt.

Aus der EP-A-0 806 260 ist ein Verfahren zum Entfernen von gebrauchten elastomeren Bezügen von Walzen sowie eine Vorrichtung zur Durchführung desselben bekannt, bei dem als Schneidwerkzeuge nicht nur glatte Messer, sondern auch geschliffene Ringstähle zur Anwendung kommen. Diese Ringstähle sind auf einem Kreuz am Ende der Arme des Wendeplattenhalters befestigt. Zur Durchführung dieses Verfahrens kommen Umfangsgeschwindigkeiten der Schneidwerkzeuge von 15 bis 70 m/s zum Einsatz bei Drehzahlen von 1.500 bis 3.000 U/min. Der Werkzeugeingriff erfolgt radial. Es entstehen relativ große Schnitzel der gebrauchten Bezüge.

Die Erfindung hat sich die Aufgabe gestellt, die Nachteile der bisher verwendeten Schneidwerkzeuge zur schneidenden Erzeugung von Oberflächen höchster Qualität von Elastomeren zu beseitigen und dabei rotierende Messerköpfe zur Verfügung zu stellen, die einfach handzuhaben sind, sicher sind, eine lange Lebensdauer aufweisen und die akustischen Lärmbelästigungen vermindern.

Diese Aufgabe wurde jetzt dadurch gelöst durch die Verwendung eines mit Drehzahlen bis 5.000 U/min rotierenden Messerkopfes mit 10 bis 30 Ringstählen auf der Peripherie einer Scheibe mit einem Durchmesser von 200 bis 800 mm zur schneidenden Erzeugung von Oberflächen höchster Qualität von Elastomeren der Härte 10 Shore A bis 100 Shore D mit Schnittgeschwindigkeiten von 20 bis 60 m/s. Der Werkzeugeingriff erfolgt radial.

Um auf derartig großen aber relativ langsam laufenden Scheiben kurze Bearbeitungszeiten zu ermöglichen, befinden sich auf der Peripherie der Scheiben mindestens 6, vorzugsweise 10 bis 30 Schneidwerkzeuge. Die hohe Anzahl der Schneidwerkzeuge einerseits und die relativ längere Zeit zwischen dem erneuten Einsatz des gleichen Schneidwerkzeugs andererseits führen zu einer deutlich längeren Lebensdauer und vermindern das Risiko der Überhitzung. Der relativ große Durchmesser der Scheibe gestattet wiederum eine wesentlich robustere Bauart, die nicht nur stabiler, sondern auch sicherer ist. Derartig große Scheiben können darüber hinaus leichter ausgewuchtet werden, was bereits nach jedem Wechsel der Schneidwerkzeuge notwendig sein kann. Insgesamt kostet eine derartige Maschine nur noch ca. 1/8 dessen, was eine Maschine gemäß DE-C-43 05 716 kostet.

Entscheidend für die gute schneidende Oberflächenbearbeitung von Elastomeren ist nämlich nicht die Drehzahl des schneidenden Werkzeuges, sondern seine Schnittgeschwindigkeit. Erfindungsgemäß wird die hohe Schnittgeschwindigkeit durch den großen Durchmesser bei niedrigeren Drehzahlen bis 5.000 U/min, vorzugsweise ca. 3.000 U/min, ermöglicht.

Während Ringstähle bisher nur in kleiner Zahl auf relativ kleinen Wendeplatten zum Einsatz kamen und nur zum Entfernen von gebrauchten elastomeren Bezügen von Walzen eingesetzt wurden, gestattet der erfindungsgemäß verwendete rotierende Messerkopf auch die schneidende Erzeugung von Oberflächen höchster Qualität von Elastomeren gemäß DE-C-43 05 716.

Es sind somit Elastomere mit den Oberflächen von Walzen im Bereich Shore Härte 10 Shore A bis 100 Shore D bearbeitbar, wobei durch kleinere Durchmesser der Ringstähle einerseits und geringe Schnitthöhen und geringeren Vorschub nur sehr kleine Teilchen von der Oberfläche des Elastomeren abgeschnitten werden. Diese kleinen Teilchen sind praktisch pulverförmig und können leicht abgesaugt werden. Wegen der geringen Verspanungskräfte ist auch die Wärmeentwicklung sehr gering und somit die thermische Belastung des auf der Walze verbleibenden Elastomeren sehr gering. Der erfindungsgemäße rotierende Messerkopf gestattet somit eine rasche und doch sehr schonende Bearbeitung, wodurch Oberflächen höchster Qualität in einem Arbeitsgang geschaffen werden. Die dabei entstehenden Oberflächen sind so gut, dass in vielen Fällen auf eine schleifende Nachbehandlung völlig verzichtet werden kann.

## Patentansprüche

1. Verwendung eines mit Drehzahlen bis 5.000 U/min rotierenden Messerkopfes mit 10 bis 30 Ringstählen auf der Peripherie einer Scheibe mit einem Durchmesser von 200 bis 800 mm zur schneidenden Erzeugung von Oberflächen höchster Qualität von Elastomeren der Härte 10 Shore A bis 100 Shore D mit Schnittgeschwindigkeiten von 20 bis 60 m/s.

## Claims

1. Use of a cutter head rotating with up to 5000 revolutions per minute and having from 10 to 30 annular cutting tools on the periphery of a disk having a diameter of from 200 to 800 mm for the production of highest quality surfaces by the cutting of elastomers having a hardness of from 10 Shore A to 100 Shore D with cutting speeds of from 20 to 60 m/s.

## Revendications

1. Utilisation d'une fraise à lames rapportées tournant à des vitesses pouvant atteindre 5000 tours/minute comportant 10 à 30 outils de coupe annulaires à la périphérie d'un disque d'un diamètre de 200 à 800 mm pour la production par coupe de surfaces de très haute qualité d'élastomères d'une dureté de 10 Shore A à 100 Shore D avec des vitesses de coupe de 20 à 60 m/s.
